# EUROPEAN PATENT APPLICATION

(11) **EP 2 036 696 A1**
(43) Date of publication of application: **18.03.2009**
(21) Application number: 06767467.1
(22) Date of filing: 28.06.2006
(51) Int. Cl.: B29C 45/50, B29C 45/62, B29C 45/77, B29D 30/60, B29D 30/62

(54) **PROCESS FOR PRODUCING TIRE THROUGH VOLUME EXTRUSION**

(71) Applicant: Toyo Tire & Rubber Co. Ltd., Osaka-shi, Osaka 550-8661 (JP)
(72) Inventor: MATSUOKA, Mamoru, Osaka-shi Osaka 550-8661 (JP); IKEGAMI, Hiroshi, Osaka-shi Osaka 550-8661 (JP)
(74) Representative: Sajda, Wolf E.
(86) International application number: PCT/JP2006/312850
(87) International publication number: WO 2008/001432

(57) **Abstract**

A process for producing a tire according to a strip build technique by the use of an injection molding machine, in which strip rubber injection can be performed in the state of being uniform in the blending degree and plasticity level of rubber material. There is provided a process for producing a tire by the use of injection molding machine (A) equipped with a material feeding aperture (8) for charging of rubber material, screw (1) for driving forward in the axial direction of the charged rubber material while blending the same, a material charging compartment (4) disposed on the distal end side of the screw (1) and a material passage (C) for feeding of the rubber material from the distal end side of the screw (1) to the material charging compartment (4). The process comprises the following steps: feeding the rubber material from the material feeding aperture (8), driving the rubber material forward while blending the same by means of the screw (1) and through the material passage (C), charging the material charging compartment (4) with the rubber material; causing the screw (1) and material feeding aperture (8) to retreat; advancing the screw (1) and carrying out injection of strip rubber from the material charging compartment (4); and winding the strip rubber (S) while rotating the forming drum (B) to thereby make tire configuration.

## Description

### TECHNICAL FIELD

The present invention relates to a process for producing a tire through strip-build using an injection molding machine.

### BACKGROUND ART

There is known a so-called strip-build technique in which strip rubber having a predetermined cross-sectional shape is repeatedly wound around a surface of a molding drum to produce a green tire (For example, Japanese Patent Application Laid-open JP-A-2004-358 738). According to this strip-build, a tire member having a desired cross-sectional shape can be formed by sequentially laminating a thin strip-build having a rectangular cross-sectional shape on the molding drum. An extruder using a gear pump is used in this conventional technique, and strip rubbers of predetermined cross-sectional shape can continuously be formed by extrusion. An extruder not using such a gear pump is used in some cases.

In such a strip-build, it is desired to use a thinner strip rubber. To reduce the thickness of the strip rubber, a cross-sectional area of a discharge opening should be adjusted, but if an attempt is made to extrude a thinner strip rubber by an extruder, an extremely high molding pressure is required. Therefore, the temperature of the rubber material is increased, and there is a problem that the rubber burns, To prevent this, it seems that a discharging speed of the strip rubber should be reduced, but this deteriorates the production efficiency of tires.

There is also known a strip-build technique using an injection molding machine instead of the extruder (Japanese Patent Applications Laid-open JP-A-63-089 336, JP-A-2001-062 941 and JP-A-2004-358 738 for example). When the injection molding machine is used, a rubber material is put into the machine and charged into a material charging chamber, and when a preset amount of rubber material is charged, the strip rubber is injected from an injection exit. Further, since it is necessary to knead the rubber material which is put, a screw is provided in the injection molding machine, and a rubber material which is put onto a surface of the screw is sent forward by the screw and the rubber material is kneaded. The rubber material which is kneaded by the screw is gradually charged into the material charging chamber.

As an injection molding machine, a machine in which a screw having a function for supplying material and an injection piston are separated from each other and a machine in which the screw having the function for supplying material and the injection piston are integral can be conceived. In the case of the former machine, rubber material is charged into the material charging chamber by the screw and in association with this, the piston retreats. This structure is a so-called first-in last-out structure in which rubber which is charged first in terms of time is injected last. With this structure, a difference in residence time in the machine between a rubber material which is charged first and a rubber material which is charged later is large and thus, there is a problem that the plasticity level of rubber is varied.

In the case of the latter structure, in association with the charging operation of rubber material into the material charging chamber by the screw, the screw also gradually retreats. When the charging operation of a rubber material into the material charging chamber is completed, the screw is moved forward. That is, this structure is a so-called first-in first-out structure in which the screw functions as the piston, and a rubber material which is charged first is injected first. However, since the screw retreats, a relative positional relation between the screw and a material supply opening is gradually varied. Thus, the kneading degree of the screw is varied between a rubber material which is charged first and a rubber material which is charged later.

### DISCLOSURE OF THE INVENTION

### PROBLEM TO BE SOLVED BY THE INVENTION

If the above-explained rubber materials having different plasticity levels and kneading degrees are charged, the discharge pressure is varied. This may vary the size of a strip rubber injected from the injection molding machine and as a result, uniformity of tires is adversely influenced. The above-described conventional technique documents disclosing the strip-build using the injection molding machine do not specifically disclose the structure of the injection molding machine to be used, but any of the injection molding machines are used, and a quality problem is caused in terms of uniformity.

The present invention has been accomplished in view of the above circumstances, and it is an object of the invention to provide a process for producing tires using an injection molding machine through a strip-build technique in which a strip rubber can be injected from an injection opening in a state where a plasticity level and a kneading degree are made uniform irrespective of timing at which the rubber material is charged.

### MEANS FOR SOLVING THE PROBLEM

To achieve the above object, the present invention provides a process for producing a tire through volume extrusion using an injection molding machine which includes: a material supplying opening through which a rubber material is charged; a screw which sends out the charged rubber material axially forward while kneading the rubber material; a material charging chamber which is disposed on the side of a tip end of the screw and to which the kneaded rubber material is charged; and a material passage through which the rubber material is supplied from the tip end side of the screw to the material charging chamber, wherein the process comprises the following steps:
supplying the rubber material from the material supplying opening, sending out the rubber material forward while kneading the same by the screw, and charging the rubber material into the material charging chamber through the material passage;
retreating the screw and the material supplying opening as the rubber material is charged into the material charging chamber;
moving the screw forward after a predetermined amount of rubber material has been charged into the material charging chamber, and injecting a strip rubber having a predetermine cross-sectional shape to a molding drum from the material charging chamber, and
winding the injected strip rubber while rotating the molding drum to form a tire shape.

The operation and effect of the process for producing tires having such a structure will be explained. The injection molding machine used when a tire is produced includes at least the material supplying opening, the screw, the material charging chamber and the material passage. If the rubber material is charged from the material supplying opening, the rubber material is kneaded by the screw and sent out forward. The rubber material which is moved forward is sent into the material charging chamber through the material passage on the tip end side of the screw.
As the rubber material is charged into the material charging chamber, the screw is gradually retreated. At that time, a structure for retreating the material supplying opening together with the screw is employed. Thus, the relative positional relation between the screw and the material supplying opening is not varied irrespective of the charging timing of the rubber material.
When a predetermined amount of rubber material has been charged into the material charging chamber, the screw is moved forward, and the strip rubber having a predetermined cross-sectional shape is injected into the surface of the molding drum from the material charging chamber. That is, the screw also has a function as a piston. By injecting the strip rubber while rotating the molding drum, a tire shape is formed on the molding drum.

The injection molding machine used in the invention is of a type in which the screw functions as the piston. That is, the injection molding machine is of a so-called first-in first-out structure, the residence time of the rubber material in the material charging chamber is constant irrespective of the charging timing of the rubber material. Therefore, the rubber material is injected from the injection opening in a state where the plasticity level of the rubber material is constant. The relative positional relation between the screw and the rubber supplying opening is not varied, and the kneaded degree of the rubber material can be constant.
As a result, when a tire is produced by the strip-build technique using the injection molding machine, it is possible to provide a process for producing a tire capable of injecting the strip rubber from the injection opening in a state where the plasticity level and the kneaded degree are uniform irrespective of the charging timing of the rubber material.

It is preferable that the injection molding machine of the invention includes an opening/closing mechanism which is mounted on the side of the tip end of the screw and which is adapted to open and close the material passage, a first cylindrical portion which surrounds the screw, and a material supplying opening mounted on the first cylindrical portion, the first cylindrical portion is adapted to slide with respect to a second cylindrical portion, the first cylindrical portion and the screw is adapted to move forward and backward in association with each other, and the process further comprises the following steps:
closing the material passage by the opening/closing mechanism after a predetermined amount of rubber material has been charged into the material charging chamber, and
pushing the rubber material in the material charging chamber by a tip end side portion of the opening/closing mechanism and a tip end of the first cylindrical portion, thereby injecting the strip rubber.

According to this structure, the screw is provided at its tip end with the opening/closing mechanism, and it is possible to control the opening and closing operation of the material passage. When the rubber material is charged into the material charging chamber, the material passage is opened, and when the screw is moved forward to inject the strip rubber, the material passage is closed, The screw is accommodated inside the first cylindrical portion, and the material supplying opening is mounted on the first cylindrical portion.
The first cylindrical portion can slide with respect to the second cylindrical portion, and the first cylindrical portion, the screw and the material supplying opening can move forward and backward integrally relative to the second cylindrical portion. When the opening/closing mechanism is closed, both the tip end of the first cylindrical portion and the tip end side of the opening/closing mechanism can function as a piston. That is, it is possible to secure a greater pressing area, and a strip rubber can be injected efficiently.

In the invention, it is preferable that the process further comprises the following steps:
detecting a pressure in the material charging chamber at an exit thereof; and
starting rotating the molding drum after the detected pressure has become equal to or higher than a predetermined value.

When the screw is moved forward and rubber material in the material charging chamber is injected, a pressure in the chamber is detected by a pressure sensor or the like, and after the pressure value has become equal to or higher than a predetermined value, the rotation of the molding drum is started. By detecting the pressure value, it is possible to determine whether a strip rubber can be injected appropriately from the injection opening and to appropriately control the rotation starting timing of the molding drum. With this, a tire shape can be produced precisely.

In the invention, it is preferable that the process further comprises the following steps:
moving the injection molding machine toward the molding drum after the charging operation of the rubber material into the material charging chamber is completed, and bringing the injection opening close to a surface of the molding drum, and
a step of forwardly moving the screw which is carried out after this step.

When the charging operation of the rubber material into the material charging chamber has been completed, the injection molding machine is moved toward the molding drum. That is, the injection opening is brought close to the surface of the molding drum so that the injected strip rubber is immediately wound around the molding drum when the winding operation of the strip rubber is started. The injection opening is brought close to the molding drum first in this manner and then, the screw is moved forward and the strip rubber is injected. With this, the winding starting operation can reliably be carried out.

In the invention, it is preferable that the process further comprises the step of retreating the injection molding machine which is brought close to the molding drum by a predetermined amount after the rotation of the molding drum is started, wherein the winding step of the strip rubber around the molding drum is carried out at this position.

After the rotation of the molding drum has been started and the winding operation of the strip rubber has been started, the injection molding machine is retreated by a predetermined amount from the state where the injection molding machine is brought close to the molding drum. At this position, the strip rubber is wound. Once the winding operation is started, the injection molding machine is retreated by the predetermined amount, even if the strip rubber is gradually wound around the surface of the molding drum and the outer diameter is increased, and the winding operation can be continued without problem.

In the invention, it is preferable that the process further comprises the following steps:
stopping the forwardly moving step of the screw after the predetermined amount of the rubber material has been injected from the material charging chamber;
retreating the screw by a predetermined amount; and
cutting the strip rubber wound around the molding drum away from the injection molding machine.

After the predetermined amount of rubber material of the screw has been injected, the forward moving step of the screw is stopped, but even if the screw is stopped, an unnecessary rubber material slightly may drip from the injection opening in some cases. Hence, the screw is retreated so that such unnecessary rubber material does not drip from the injection opening. With this, no unnecessary rubber is supplied to the molding drum, and a tire having a precise shape can be produced.

In the invention, it is preferable that the step of cutting the strip rubber away from the injection molding machine is carried out in such a manner that the rotation of the molding drum is once stopped and then, the injection opening is brought into contact with a surface of the strip rubber wound around the molding drum and then, the injection molding machine is retreated.

After a predetermined amount of strip rubber has been injected from the injection opening, it is necessary to cut the rubber material in the injection molding machine and the strip rubber on the molding drum away from each other. Basically, it is possible to cut the strip rubber by moving the injection molding machine away from the molding drum, but it is necessary to cut the strip rubber such that the cut portion is clean or beautiful. Hence, the injection molding machine is once brought close to the surface of the strip rubber which is round around the surface of the molding drum and brought into contact with the injection exit and then, the injection molding machine is retreated. With this, unnecessary force is not applied to the rubber, and the strip rubber can be cut. As a result, the cut portion is not rumpled and the strip rubber can be cut.

### Brief Description of the Drawings

- Fig. 1: is a schematic diagram showing a structure of a green tire producing equipment;
- Fig. 2A: is a diagram for explaining operations of an injection molding machine and a molding drum when a tire is produced;
- Fig. 2B: is a diagram for explaining operations of the injection molding machine and the molding drum when the tire is produced;
- Fig. 2C: is a diagram for explaining operations of the injection molding machine and the molding drum when the tire is produced;
- Fig. 2D: is a diagram for explaining operations of the injection molding machine and the molding drum when the tire is produced;
- Fig. 2E: is a diagram for explaining operations of the injection molding machine and the molding drum when the tire is produced;
- Fig. 2F: is a diagram for explaining operations of the injection molding machine and the molding drum when the tire is produced;
- Fig. 2G: is a diagram for explaining operations of the injection molding machine and the molding drum when the tire is produced;
- Fig. 2H: is a diagram for explaining operations of the injection molding machine and the molding drum when the tire is produced;
- Fig. 21: is a diagram for explaining operations of the injection molding machine and the molding drum when the tire is produced;

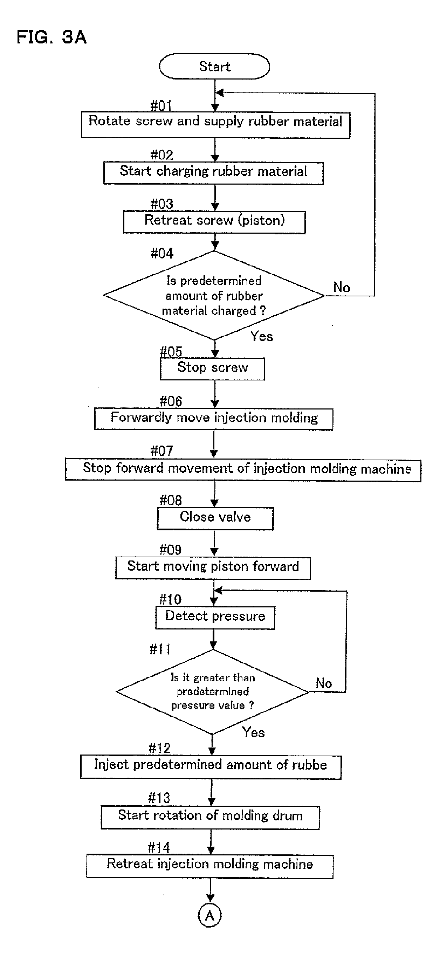

- Fig. 3A: is a flowchart for explaining a tire producing procedure; and

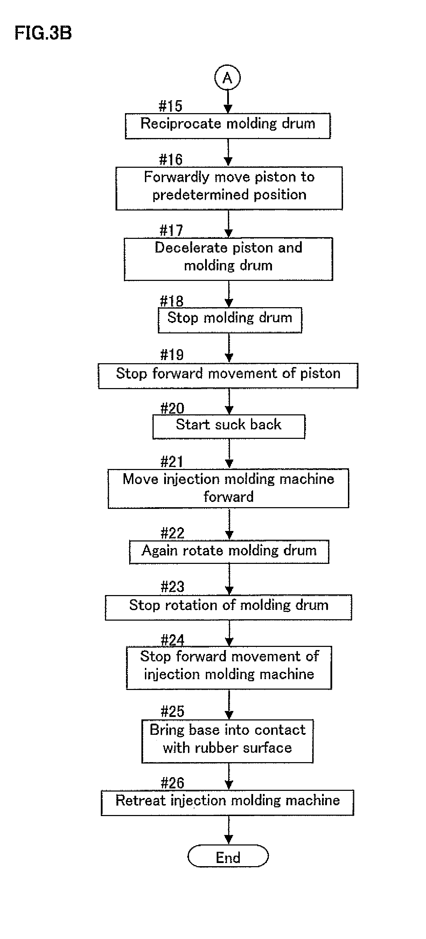

- Fig. 3B: is a flowchart for explaining the tire producing procedure.

### DESCRIPTION OF SYMBOLS

- A: injection molding machine
- B: molding drum
- C: material passage
- S: strip rubber
- P: piston
- 1: screw
- 2: first cylinder
- 2a: tip end surface
- 3: chucking valve
- 4: material charging chamber
- 5: member
- 6: base
- 6a: injection opening
- 7: pressure sensor
- 8: material supplying opening
- 9: second cylinder
- 10: servomotor
- 11: gear
- 12: hydraulic servomotor
- 27: control section

### BEST MODE FOR CARRYING OUT THE INVENTION

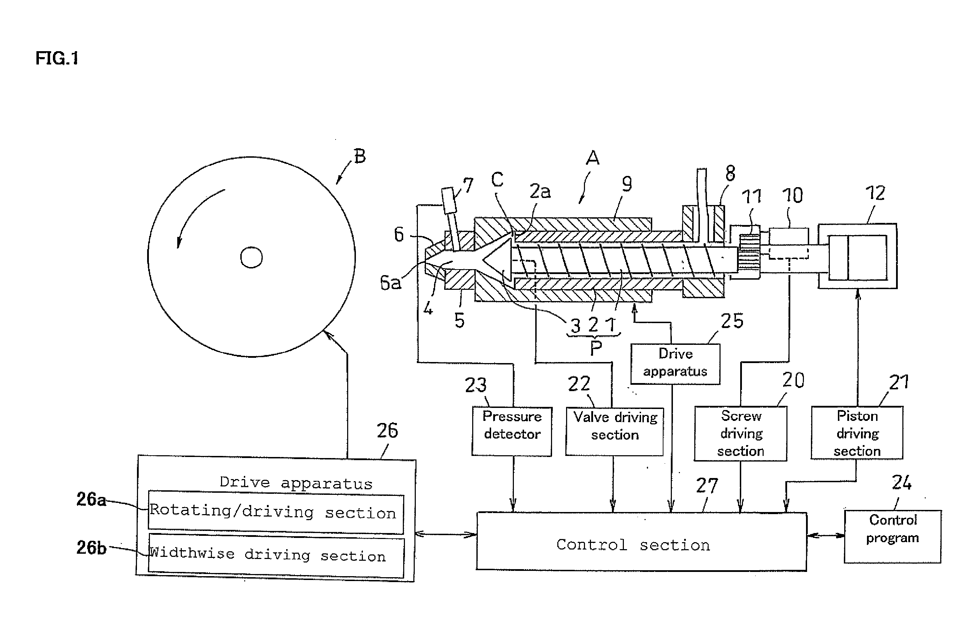

A preferred embodiment of a process for producing a tire through volume extrusion according to the present invention will be explained. Fig. 1 is a schematic diagram showing a structure of producing equipment used for producing a tire.

### Structure of producing equipment

A green tire of the invention is produced using a strip-build technique. According to the strip-build, a strip rubber having a small cross-sectional area is discharged onto a molding drum, it is wound around the molding drum and a tire having a desired shape is produced. As a cross-sectional area of a strip rubber is reduced, a tire having a more precise cross-sectional shape can be produced. Since it is difficult to extrude a thin strip rubber if the extruder is used, the strip rubber is injected (discharged) using an injection molding machine.

As shown in Fig. 1, the producing equipment includes an injection molding machine A and a molding drum **B**. The injection molding machine **A** is laterally disposed, and a screw 1 is disposed along an axis of the injection molding machine **A**. The screw 1 has a function for sending out a charged rubber material forward (from right to left in Fig. 1) while kneading the rubber material. The screw 1 is disposed in the first cylinder 2 (corresponding to a first cylindrical portion), and a space through which a rubber material passes is formed between an inner wall surface of the first cylinder 2 and an outer surface of the screw 1.

The screw 1 is provided at its tip end with a chucking valve 3 (corresponding to an opening/closing mechanism). The chucking valve 3 controls the opening/closing operation for allowing a rubber material to pass through a material passage **C** between a back surface of the chucking valve 3 and a tip end surface 2a of the first cylinder 2. Fig. 1 shows a state where the material passage **C** is opened, and a rubber material which is kneaded by the screw 1 can pass through the material passage **C**.

The chucking valve 3 is provided at its tip end with a material charging chamber 4. A rubber material which has passed through the material passage **C** is charged into the material charging chamber 4. The material charging chamber 4 is formed in an inner space of a member 5. The member 5 is provided at its tip end with a base 6, and an injection opening 6a is formed in the base 6. The injection opening 6a is formed into a shape corresponding to a cross-sectional shape of a strip rubber to be injected. A pressure sensor 7 for detecting a rubber pressure in the material charging chamber 4 is also provided.

A material supplying opening 8 is integrally mounted on a rear end of the first cylinder 2, and a rubber material is charged from the material supplying opening 8. The rubber material is charged in an appropriate form such as a ribbon form. The first cylinder 2 is fitted to an inner wall surface of the second cylinder 9, and the first cylinder 2 can slide in a longitudinal direction along the inner wall surface of the second cylinder 9.

A servomotor 10 for rotating and driving the screw 1 is provided, and the servomotor 10 is connected through a gear 11. A hydraulic servomotor 12 for forwardly and backwardly moving the screw 1 is provided. The hydraulic servomotor 12 is connected to a rear end of the screw 1. The screw 1, the first cylinder 2, the chucking valve 3, the servomotor 10 and the gear 11 are integrally formed into one unit, and the entire unit is moved forward and backward by the hydraulic servomotor 12. If the screw 1, the first cylinder 2 and the chucking valve 3 are moved forward, a rubber material in the material charging chamber 4 can be injected from the injection opening 6a. Therefore, the screw 1, the second cylinder 2 and the chucking valve 3 function as a piston **P**.

A screw driving section 20 includes a drive circuit for driving the servomotor 10. A driving amount of the servomotor 10 can be obtained from a signal of an encoder and with this, the number of revolutions of the screw 1 can be controlled. A piston driving section 21 includes a drive circuit for driving the hydraulic servomotor 12. A driving amount of the servomotor 12 can be obtained from a signal of an encoder, and a position of the screw 1 in the longitudinal direction can be monitored.
The valve driving section 22 has a function for controlling the opening/closing operation of the chucking valve 3. A pressure detector 23 detects a pressure of rubber in the material charging chamber 4 based on a signal from the pressure sensor 7. A control program 24 is for carrying out a desired operation of the injection molding machine A or the molding drum **B**.

A drive apparatus 25 is adapted to bring the entire injection molding machine **A** toward or away from the molding drum **B.** When a strip rubber is to be wound around the molding drum **B**, the injection molding machine **A** is brought toward the molding drum **B** and this winding operation is carried out.

The molding drum **B** is driven by a drive apparatus 26. The drive apparatus 26 includes a servomotor, a speed reduction mechanism for connecting the servomotor and the molding drum **B**, and a drive circuit. A rotating and driving section 26a rotates the molding drum **B** in the counterclockwise direction as illustrated when a strip rubber is wound around the molding drum B. A widthwise driving section 26b reciprocates the molding drum **B** in a widthwise direction of the tire (a direction perpendicular to a paper sheet of Fig. 1).
When the strip rubber is to be wound around the molding drum **B**, it is necessary to reciprocate it along the widthwise direction while rotating the molding drum **B**. It is to be noted that the injection molding machine **A** may be moved in the widthwise direction instead of moving the molding drum **B** in the widthwise direction.

A control section 27 collectively controls all the operations of the injection molding machine A and the molding drum **B**. The control section 27 controls various things based on the control program 24, a pressure detected by a pressure detector 23 and a moving amount of the screw 1, etc.

### Tire producing steps

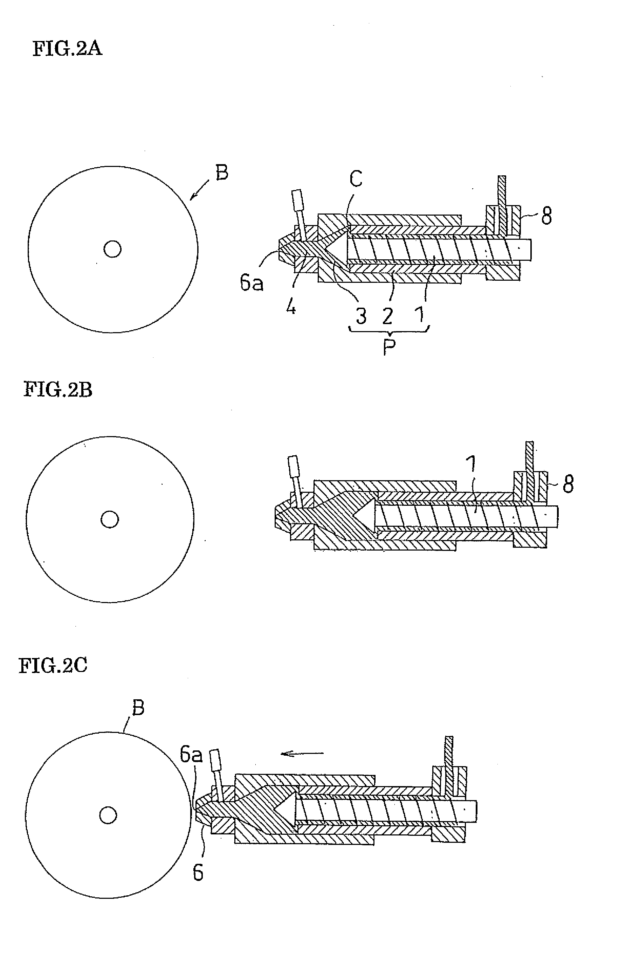

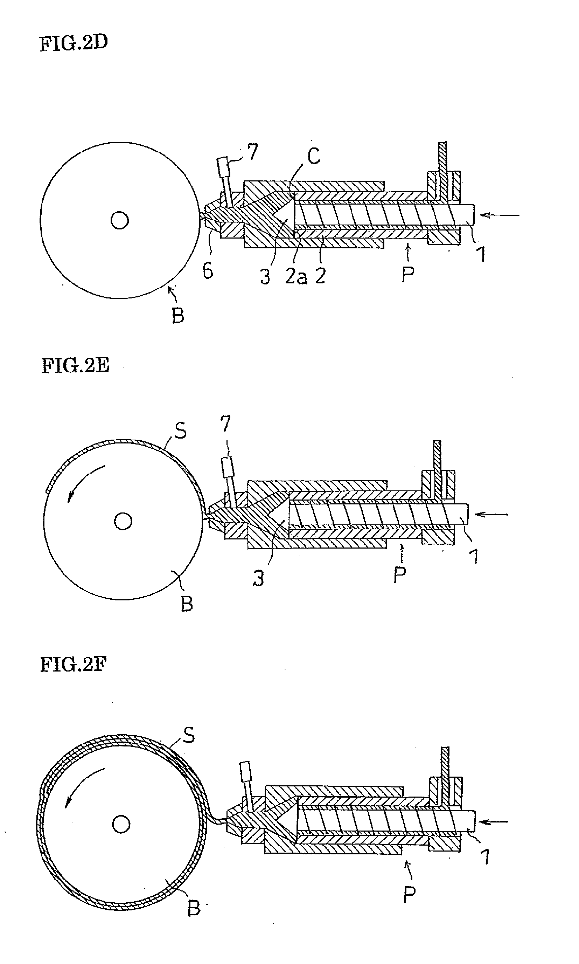

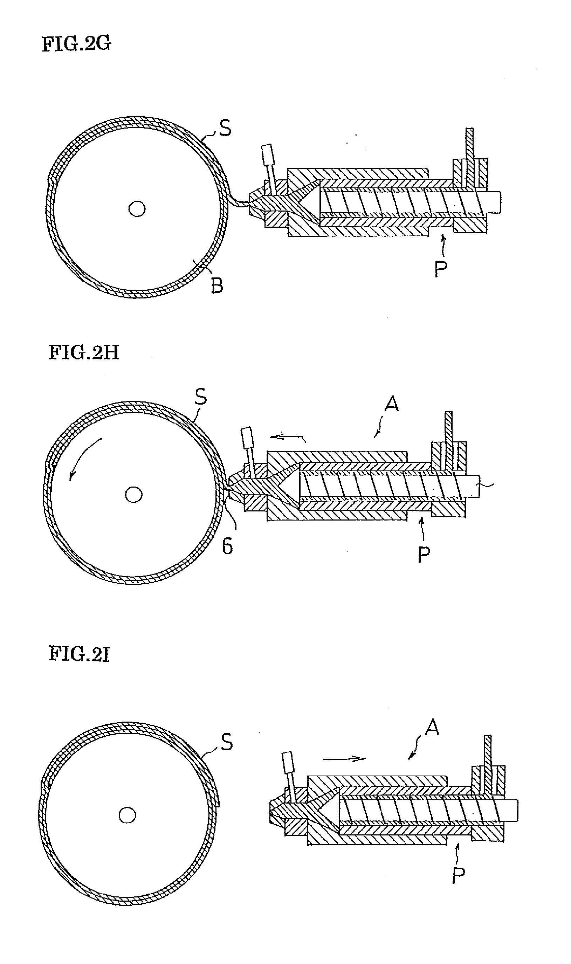

Next, the operation when a green tire is produced will be explained using the producing equipment shown in Fig. 1. Figs. 2 are diagrams explaining the operations of the injection molding machine **A** and the molding drum **B**, and Figs. 3 are flowchart for explaining the operations.

First, it is necessary to measure the rubber material. In the initial state as shown in Fig. 2A, the molding drum **B** and the injection molding machine **A** are separated from each other by a predetermined distance. The screw 1 is rotated and rubber material is charged from the material supplying opening 8 (#01). The charged rubber material is kneaded by the rotating screw 1 and is sent out forward. The chucking valve 3 is opened, the rubber material is charged into the material charging chamber 4 through the material passage C formed on the side of the tip end of the screw 1 (#02).
The inner pressure of rubber is applied to the injection opening 6a while the rubber material is charged, but the pressure is not increased to such a level that the rubber is injected from the injection opening 6a. Therefore, rubber material is not discharged from the injection opening 6a while the rubber material is charged.

If rubber material is charged into the material charging chamber 4, the piston **P** is gradually retreated by pressure of the charged rubber (#03). At that time, not only the screw 1 but also the first cylinder 2 retreats together with the screw 1. Therefore, the material supplying opening 8 which is integral with the first cylinder 2 also retreats. Thus, a relative positional relation between the screw 1 and the material supplying opening 8 is not varied also while rubber material is charged. With this, rubber material is sent into the material charging chamber 4 always in the same kneaded state irrespective of charging timing of rubber material. Further, since rubber material which is first supplied is first charged from the tip end side of the material charging chamber 4, the injection molding machine A is of the first-in first-out type structure.

If the screw 1 retreats, the encoder detects its moving amount. The moving amount of the screw 1 is in a linear relation with an amount of supplied rubber material. It is determined whether a predetermined amount of rubber material is supplied or not based on the moving amount of the screw 1 (#04), and if it is detected that the predetermined amount of rubber material is supplied, the rotation of the screw 1 is stopped (#05). This control is performed by the function of the control section 27. With this, the measuring operation of material is completed (Fig. 2B).

Next, the entire injection molding machine **A** is moved forward by the drive apparatus 25 (#06). As shown in Fig. 2C, injection molding machine **A** is stopped in a state where the injection opening 6a is of the injection molding machine **A** approaches the surface of the molding drum **B** (#07). It is preferable that the distance between the base 6 and the surface of the molding drum B is about several millimeters.
The fact that the injection molding machine **A** approaches a predetermined position can be detected based on the moving amount of the entire injection molding machine **A** by the drive apparatus 25. Alternatively, this fact may be detected by providing a proximity sensor.

After the injection molding machine **A** has been stopped, the chucking valve 3 is driven and the material passage **C** is closed (#08). Fig. 2D shows this state. At that time, the tip end side of the chucking valve 3 and the tip end surface 2a of the first cylinder 2 function as pushing surfaces of the piston **P**. If the chucking valve 3 is closed, a greater pushing surface can be secured.

Next, the piston driving section 21 is driven to move the piston **P** forward (#09). Fig. 2E shows this state. With this, the screw 1, the first cylinder 2 and the chucking valve 3 integrally move forward. At the same time, a rubber pressure in the vicinity of the injection opening 6a is detected by the pressure sensor 7 (#10).
This is because that even if the piston **P** is moved forward, the strip rubber **S** is not injected immediately and the strip rubber **S** is injected only after the pressure has reached the predetermined value. That is, an injection starting time point of a strip rubber **S** is detected by the pressure sensor 7. The predetermined value can set previously.

If it is detected that the pressure value has become equal to or greater than the predetermined value (#11), a strip rubber **S** of a predetermined cross-sectional shape is injected from the injection opening 6a (#12). After a predetermined amount of strip rubber **S** has been injected, the molding drum starts rotating (#13). The rotation of the molding drum is controlled in synchronization with the motion of the piston **P**.
At the time of acceleration operation of start of movement of the piston **P**, the molding drum **B** is also allowed to accelerate similarly, and if the speed of the piston **P** becomes constant, the rotation of the molding drum **B** also becomes constant. The operation at the time of deceleration is also the same. With this, it is possible to wind the strip rubber around the molding drum **B** under a constant tension.

After the rotation of the molding drum **B** has been started, the injection molding machine **A** is retreated to a predetermined position (#14). Fig. 2F shows this state, The moving amount when the injection molding machine **A** is retreated can be controlled in the same manner as that described above. If the strip rubber is wound around the molding drum **B**, the outer diameter is gradually increased.
The injection molding machine **A** is retreated so that the motion of the base 6 and the motion of the molding drum **B** do not interfere while taking this point into consideration. A point as to which position the injection molding machine **A** is retreated can previously be set.

If the piston **P** is moved forward to a predetermined position, the reciprocating movement of the molding drum **B** is started by the widthwise driving section 26b (#15). This starting time point is a state where the winding operation of the strip rubber **S** of about one rotation has been completed. If the piston **P** moves forward and it is detected that the piston **P** has moved forward to the predetermined position (#16), the deceleration of the piston **P** is started (#17).
This predetermined position can previously be set, and the predetermined position can be detected based on the moving amount of the piston **P**. The rotation of the molding drum **B** is decelerated in association with deceleration of the piston **P**. With this, the molding drum **B** is stopped (#18) and the piston **P** is also stopped (#19). Fig. 2G shows this state. It is preferable that the molding drum **B** is stopped at the same time when or immediately before the piston **P** is stopped. This is because that unnecessary tension is not applied to the strip rubber.

Next, the piston **P** is retreated to carry out the suck back (#20). The suck back is to prevent a rubber material from dripping from the injection opening 6a by a pressure remaining in the material charging chamber 4 even after the injection is completed by pressing of the piston **P**. If the remaining pressure is eliminated by the suck back, it is possible to prevent a rubber material from dripping. While the piston **P** is retreated, the inside pressure is detected by the pressure sensor 7, and if it is detected that the pressure value is lowered to a predetermined value or less, the piston **P** is stopped. This predetermined value can also be set previously.

The entire injection molding machine **A** is moved forward simultaneously with or substantially simultaneously with the suck back operation, and the injection molding machine A is brought close to the surface of the molding drum **B** (#21). Simultaneously with this, the molding drum **B** is again rotated in the counterclockwise direction (#22).
Fig. 2H shows this state. Both the injection molding machine **A** and the molding drum **B** are driven to prevent a rubber between the surface of the molding drum **B** and the injection opening 6a from being sagging.
If the base 6 approaches the predetermined position, the rotation of the molding drum **B** is stopped (#23). Immediately after the rotation has been stopped, the forward movement of the injection molding machine **A** is stopped (#24). At that time, the surface of the base 6 comes into contact with the strip rubber **S** wound around the surface of the molding drum **B** (#25).

Next, the injection molding machine **A** is again retreated (#26). The base 6 is again moved away after it has come into contact with the strip rubber S, and the base 6 and the strip rubber **S** which is wound around the molding drum **B** can smoothly be separated from each other. That is, the rubber can be cut away without applying an excessive force to the strip rubber **S**. Fig. 21 shows this state.

With this, the winding operation of the predetermined amount of the rubber material charged into the material charging chamber 4 is completed. If the winding operation is carried out successively, the above-described operation is repeated. With this structure of the invention, the kneading degree after the rubber material has been supplied until the rubber material is charged into the material charging chamber is constant irrespective of timing at which the rubber material is charged. According to the structure of the invention, the kneading degree and the plasticity level can be made constant irrespective of timing at which rubber is supplied. Therefore, the uniformity of a produced tire can be enhanced.

The structure of the producing equipment and the tire producing step explained in this embodiment are only examples, and various modifications can be conceived. For example, concerning the internal structure of the injection molding machine **A** and the driving mechanism of the piston **P**, various modifications can be conceived. The disposing direction of the injection molding machine **A** is not limited to the lateral direction, and the injection molding machine **A** may be disposed diagonally or vertically. The number of the injection molding machines **A** is not limited to one, and two or more injection molding machines **A** may be used. In step #6, the material passage **C** may be closed by the chucking valve 3 before the injection molding machine **A** is moved forward.

## Claims

1. A process for producing a tire through volume extrusion using an injection molding machine which includes: a material supplying opening through which a rubber material is charged; a screw which sends out the charged rubber material axially forward while kneading the rubber material; a material charging chamber which is disposed on the side of a tip end of the screw and to which the kneaded rubber material is charged; and a material passage through which the rubber material is supplied from the tip end side of the screw to the material charging chamber, wherein the process comprises the following steps:
- supplying the rubber material from the material supplying opening, sending out the rubber material forward while kneading the same by the screw, and charging the rubber material into the material charging chamber through the material passage;
- retreating the screw and the material supplying opening as the rubber material is charged into the material charging chamber;
- moving the screw forward after a predetermined amount of rubber material has been charged into the material charging chamber, and injecting strip rubber having a predetermined cross-sectional shape to a molding drum from the material charging chamber, and
- winding the injected strip rubber while rotating the molding drum to form a tire shape.

2. The process for producing the tire according to claim 1,
wherein the injection molding machine includes an opening/closing mechanism which is mounted on the side of the tip end of the screw and which is adapted to open and close the material passage, a first cylindrical portion which surrounds the screw, and a material supplying opening mounted on the first cylindrical portion, the first cylindrical portion is adapted to slide with respect to a second cylindrical portion, the first cylindrical portion and the screw are adapted to move forward and backward in association with each other, and
wherein the process further comprises the following steps:
- closing the material passage by the opening/closing mechanism after a predetermined amount of rubber material has been charged into the material charging chamber, and
- pushing the rubber material in the material charging chamber by a tip end side portion of the opening/closing mechanism and a tip end of the first cylindrical portion, thereby injecting the strip rubber.

3. The process for producing the tire according to claim 1,
wherein the process further comprises the following steps:
- detecting a pressure in the material charging chamber at an exit thereof; and
- starting rotating the molding drum after the detected pressure has become equal to or higher than a predetermined value.

4. The process for producing the tire according to claim 1,
wherein the process further comprises the following steps:
- moving the injection molding machine toward the molding drum after the charging operation of the rubber material into the material charging chamber has been completed, and bringing the injection opening close to a surface of the molding drum, and
- a step of forwardly moving the screw which is carried out after this step.

5. The process for producing the tire according to claim 4,
wherein the process further comprises the following step:
- retreating the injection molding machine which is brought close to the molding drum by a predetermined amount after the rotation of the molding drum has been started, and wherein
- the winding step of the strip rubber around the molding drum is carried out at this position.

6. The process for producing the tire according to claim 5,
wherein the process further comprises the following steps:
- stopping the forwardly moving step of the screw after a predetermined amount of the rubber material has been injected from the material charging chamber;
- retreating the screw by a predetermined amount; and
- cutting the strip rubber wound around the molding drum away from the injection molding machine.

7. The process for producing the tire according to claim 6,
wherein the step of cutting the strip rubber away from the injection molding machine is carried out in such a manner that the rotation of the molding drum is once stopped and then, the injection opening is brought into contact with a surface of the strip rubber wound around the molding drum and then, the injection molding machine is retreated.
